# EUROPÄISCHE PATENTANMELDUNG

(11) **EP 3 910 767 A1**
(43) Veröffentlichungstag der Anmeldung: **17.11.2021**
(21) Anmeldenummer: 21168236.4
(22) Anmeldetag: 14.04.2021
(51) Int. Cl.: H02K 15/04, H02G 1/12

(54) **VORRICHTUNG UND VERFAHREN ZUM ABISOLIEREN VON LEITERSTÜCKEN**

(30) Priorität: 13.05.2020 DE 102020112892
(71) Anmelder: Gehring Technologies GmbH + Co. KG, 73760 Ostfildern (DE)
(72) Erfinder: Bertuetti, Diego, 25080 MUSCOLINE (IT); Freitag, Martin, 72622 Nürtingen (DE); Günther, Luis, 70597 Stuttgart (DE); Bapp, Jaro, 71272 Renningen (DE); Bäcker, Daniel, 72666 Neckartailfingen (DE)
(74) Vertreter: DREISS Patentanwälte PartG mbB

(57) **Zusammenfassung**

Die Erfindung betrifft eine Vorrichtung und ein Verfahren zum Abisolieren von Leiterstücken sowie eine Vorrichtung und ein Verfahren zum Herstellen von Steckspulen.

## Beschreibung

Die Erfindung betrifft eine Vorrichtung und ein Verfahren zum Herstellen von Steckspulen sowie eine Vorrichtung und ein Verfahren zum Abisolieren von Leiterstücken.

Bei der sogenannten Steckspulen-Technologie werden einzelne Steckspulen (Leiterstücke, die in bestimmter Weise geformt sind) in einen Statorkern eingesetzt. Bei der Hairpin-Technologie werden dabei im weitesten Sinne haarnadelförmige Leiterstücke (Hairpins) unter anderem zusammen mit einzelnen andersartigen Sonderpins in einen Statorkern eingesetzt.

Hairpins sind dabei Leiterstücke mit im Wesentlichen zwei länglich erstreckten parallelen Schenkeln und einem diese beiden Schenkel verbindenden Verbindungsabschnitt. Die Vielzahl an Leiterstücken (Steckspulen oder Hairpins) ist im Statorkern üblicherweise derart angeordnet, dass die Leiterstücke auf mehreren in einer Umfangsrichtung verlaufenden Kreisbahnen in Reihen, die jeweils in einer Radialrichtung erstreckt sind, angeordnet sind. Die einzelnen Reihen der Leiterstücke sind dabei üblicherweise in radial erstreckten nutförmigen Ausnehmungen im Material des Statorkerns angeordnet. Dabei ragen bei Hairpins die freien Enden der Schenkel auf einer Seite des Statorkerns aus diesem hinaus und die Verbindungsabschnitte sind auf der anderen Seite des Statorkerns angeordnet.

Nach dem Einsetzen werden die freien Enden in Umfangsrichtung verdreht bzw. verbogen und anschließend miteinander verschweißt.

Die Hairpins bzw. allgemein Steckspulen werden üblicherweise unter Verwendung eines im Ausgangszustand als Endlosmaterial vorliegenden Leitermaterials gefertigt. Das Endlosmaterial liegt üblicherweise zunächst in aufgerollter Form vor. Dieses Endlosmaterial wird abgerollt, in eine gerade erstreckte Form überführt, die Isolation an bestimmten Stellen entfernt und einzelne Stücke werden abgelängt (Fertigen von auf eine bestimmte Länge zugeschnittenen geraden Leiterstücken). Bei anderen Verfahren wird die Isolation entfernt, wenn die Steckspulen bereits in den Statorkern eingesetzt wurden.

Aufgabe der vorliegenden Erfindung ist es, eine Möglichkeit bereitzustellen, Steckspulen, insbesondere Hairpins mit wohl definierten abisolierten Bereichen effizient und zuverlässig zu fertigen.

Diese Aufgabe wird durch eine Vorrichtung nach Anspruch 1 und ein Verfahren nach Anspruch 4 zum Herstellen von Steckspulen gelöst. Ebenso wird sie durch eine Vorrichtung nach Anspruch 7 und ein Verfahren nach Anspruch 12 zum Abisolieren von entlang einer jeweiligen Leiterstückachse gerade erstreckten, abgelängten Leiterstücken gelöst.

Die Vorrichtung zum Herstellen von Steckspulen ist ausgebildet, um diese aus einem, insbesondere aufgerollten, quasi endlosen Leitermaterial zu fertigen. Die Steckspulen sind dabei insbesondere Hairpin-Steckspulen. Das Leitermaterial umfasst eine als Ummantelung ausgebildete Isolierung. Diese Isoliereng erstreckt sich im Ausgangszustand entlang der gesamten Länge des quasi endlosen Leitermaterials.

Die Vorrichtung umfasst mehrere Stationen, die entlang einer Transportstrecke angeordnet sind. Mit Transportstrecke ist dabei der Pfad des Leitermaterials durch die Vorrichtung zum Herstellen von Steckspulen gemeint. Die Transportstrecke ist daher nicht notwendigerweise geradlinig, sondern bezieht sich auf die Abfolge der einzelnen Stationen, in denen nacheinander die Bearbeitung des Leitermaterials erfolgt.

Die Vorrichtung kann eine Lieferstation umfassen, in der das Leitermaterial bspw. von einer Rolle abgewickelt werden kann, oder in bereits grader Form bereitgestellt werden kann. Falls das Leitermaterial von einer Rolle abgewickelt wird, umfasst die Vorrichtung zum Herstellen von Steckspulen typischerweise eine, insbesondere direkt auf die Lieferstation folgende, Begradigungsstation. In dieser wird das Leitermaterial begradigt, also etwaige Krümmungen, die durch den vorigen aufgerollten Zustand verursacht sind, werden entfernt.

Die Vorrichtung umfasst eine Ablängstation zum Ablängen des Leiterstückmaterials in Leiterstücke mit einer für die spätere Steckspule vorgesehenen Länge. Entlang der Transportstrecke nach der Ablängstation folgt, insbesondere direkt, eine Abisolierstation zum Abisolieren der Enden der Leiterstücke. Die Abisolierstation kann eine Vorrichtung zum Abisolieren des Leitermaterials umfassen, wie sie nachfolgend noch im Detail erläutert wird. Die Abisolierstation umfasst eine Strahlquelle. Mittels der Strahlquelle kann elektromagnetische Strahlung, insbesondere Laserstrahlung, auf die abzuisolierenden Bereiche gerichtet werden. Die Abisolierstation umfasst insbesondere eine Rotationseinheit mittels der eine rotatorische Relativbewegung zwischen Leiterstücken und der Strahlquelle bewirkbar ist. Es kann also bspw. die Strahlquelle auf einer Kreisbahn um das jeweilige Leiterstück bewegt werden oder das jeweilige Leiterstück kann um seine Leiterstückachse rotiert werden.

Nach der Abisolierstation kann, insbesondere direkt (also ohne eine weitere dazwischenliegende Station), eine Mess- und/oder Bürststation folgen. Die Messstation dient zum Vermessen der Leiterstücke, insbesondere des Ergebnisses des Abisolierens. Die Bürststation dient zum Abbürsten der abisolierten Enden der Leiterstücke.

Danach folgt eine Biegestation zum Umformen der Leiterstücke in eine Form einer vorgesehenen Steckspule. Danach kann wiederum eine Einsetzstation zum Einsetzen der Steckspulen in einen Statorkern folgen.

Die Biegestation kann wenigstens eine Freiformbiegeeinheit zur Umformung der Leiterstücke in einzeln vorgebbare dreidimensionale Steckspulenformen und eine 2D-Biegeeinheit zur Umformung der Leiterstücke in zweidimensionale Steckspulenformen umfassen. Damit können zur Bestückung des Statorkerns flexibel beide Arten der Steckspulen gefertigt werden. Insbesondere kann die Vorrichtung zum Herstellen von Steckspulen eine Weicheneinrichtung umfassen, mittels der ein Leiterstück entweder der Freiformbiegeeinheit oder der 2D-Biegeeinheit zugeführt werden kann.

Entlang der Transportstrecke kann zwischen der Ablängstation und der Abisolierstation eine Station zum Vereinzeln der abgelängten Leiterstücke angeordnet sein.

Das erfindungsgemäße Verfahren zum Herstellen von Steckspulen aus einem quasi endlosen Leitermaterial, das eine als Ummantelung ausgebildete Isolierung umfasst, umfasst nacheinander die folgenden Schritte:
Schritt a) insbesondere Begradigen des zuvor aufgerollten Leitermaterials. Dieser Schritt ist optional, und kann verwendet werden, wenn das Leitermaterial ursprünglich in aufgerollter Form vorliegt.
Schritt b) Ablängen des Leiterstückmaterials in Leiterstücke mit einer für die spätere Steckspule vorgesehenen Länge.
Schritt c) Abisolieren der Enden der Leiterstücke. Das Abisolieren erfolgt mittels elektromagnetischer Strahlung, insbesondere Laserstrahlung. Während dem Abisolieren kann eine rotatorische Relativbewegung zwischen Leiterstücken und der Strahlquelle der elektromagnetischen Strahlung erfolgen. Insbesondere können die jeweiligen Leiterstücke um ihre jeweilige Leiterstückachse rotiert werden. So kann mittels einer Strahlquelle das Abisolieren durchgeführt werden.
Optional Schritt d) Vermessen der Leiterstücke. In diesem Schritt kann die Länge der Leiterstücke geprüft werden. Es ist auch möglich die Länge und/oder die Oberflächenqualität der abisolierten Bereiche zu prüfen, also quasi das Ergebnis des Abisolierens. In diesem Schritt kann alternativ oder zusätzlich auch ein Abbürsten der abisolierten Enden der Leiterstücke erfolgen. Damit können bspw. Reste der Isolation von den Leiterstücken entfernt werden.
Schritt e) Umformen der Leiterstücke in eine Form einer vorgesehenen Steckspule. Bspw. können die Leiterstücke in eine Hairpinform oder eine I-Pin-Form oder eine D-Pin-Form umgeformt werden.
Schritt f) insbesondere Einsetzen der Steckspulen in einen Statorkern. Die Steckspulen können direkt im Rahmen des Verfahrens in einen Statorkern eingesetzt werden oder es ist auch möglich, dass die fertig umgeformten Steckspulen einer weiteren Bearbeitung zugeführt werden oder anderweitig verwendet werden.

Das eingangs genannte quasi endlose Leitermaterial kann wie bereits erwähnt in aufgerollter Form als Ausgangsmaterial für das Verfahren dienen. Es kann jedoch auch bereits in gerader Form vorliegen.

Im Schritt e) kann ein Umformen eines Leiterstücks in eine dreidimensionale Steckspulenform und/oder ein Umformen eines Leiterstücks in eine zweidimensionale Steckspulenform vorgesehen sein. Insbesondere kann vorgesehen sein, dass sowohl eine dreidimensionale Steckspulenform und in einem nachfolgenden oder vorhergehenden Durchlauf bei der Fertigung einer weiteren Steckspule eine zweidimensionale Steckspulenform erzeugt wird.

Zwischen den Schritten b) und c) kann ein Vereinzeln der abgelängten Leiterstücke erfolgen. Dies kann die Zuverlässigkeit des Arbeitsschritts erhöhen.

Die Abisolierstation der Vorrichtung (10) zum Herstellen von Steckspulen kann eine der nachfolgend beschriebenen erfindungsgemäßen Vorrichtungen zum Abisolieren umfassen. Dies ermöglicht ein besonders effizientes und schnelles Abisolieren großer Stückzahlen an Leiterstücken.

Die erfindungsgemäße Vorrichtung zum Abisolieren ist ausgebildet, um abgelängte Leiterstücke (auf eine endgültige Länge zugeschnitten), die entlang einer jeweiligen Leiterstückachse gerade erstreckt (bereits begradigt) sind, abzuisolieren. Die Leiterstücke weisen eine als Ummantelung ausgebildete Isolierung. Diese wird im Bereich ihrer Enden entfernt. Die Leiterstücke liegen also bereits in ihrer endgültigen Länge vor. Nach dem Abisolieren werden sie noch in ihre endgültige Form gebogen, typischerweise in eine Hairpinform. Die Leiterstücke weisen üblicherweise einen im Wesentlichen rechteckigen Querschnitt auf. Typischerweise weisen die Leiterstücke im Querschnitt abgerundete oder angefaste Ecken auf.

Die Vorrichtung umfasst eine Transporteinrichtung. Beispielsweise können hier Förderbänder bzw. ein Förderband oder eine greiferbasierte Förderung vorgesehen sein. Die Transporteinrichtung ist ausgebildet, um mehrere Leiterstücke zeitgleich entlang einer zur Leiterstückachse bzw. zu den Leiterstückachsen parallelen Transportrichtung zu bewegen. Die Leiterstücke sind dabei in einer zur Transportrichtung orthogonalen Querrichtung parallel zueinander und nebeneinander angeordnet. Typischerweise ist die Vorrichtung derart ausgebildet, dass die Leiterstücke entlang einer geradlinig ausgebildeten Transportstrecke durch die Vorrichtung transportiert werden.

Die Vorrichtung umfasst einen Arbeitsbereich, in dem das Abisolieren der Leiterstücke erfolgt. Die geradlinige Transportstrecke erstreckt sich dabei typischerweise durch den Arbeitsbereich hindurch. Der Arbeitsbereich stellt einen Bereich der Vorrichtung dar, in dem die Isolierung von den Leiterstücken lokal entfernt wird. Die Transporteinrichtung führt die Leiterstücke dem Arbeitsbereich zu und entfernt die Leiterstücke aus dem Arbeitsbereich, wenn die Isolierung entsprechend entfernt worden ist.

Die Vorrichtung umfasst eine Strahlquelle. Die Strahlquelle ist typischerweise eine Laserstrahlquelle. Die Strahlquelle weist eine Fokuszone im Arbeitsbereich auf. Mit einer Fokuszone ist ein räumlicher Bereich gemeint, in dem die Strahlung der Strahlquelle fokussierbar ist. Die Strahlquelle kann, beispielsweise mittels Umlenkeinrichtungen und/oder Fokussiereinrichtungen, derart ausgebildet sein, dass die Fokuszone bewegbar ist. Insbesondere kann die Fokuszone in einer durch die Querrichtung und die Transportrichtung aufgespannten Ebene bewegbar sein. Die Strahlquelle kann auch derart ausgebildet sein, dass die Fokuszone in einer zu diesen beiden Richtungen (Querrichtung und Transportrichtung) orthogonalen Höhenrichtung bewegbar ist.

Die Strahlquelle ist angeordnet, um die Leiterstücke, die sich im Arbeitsbereich befinden, in der Fokuszone derart zu bestrahlen, dass in dem bestrahlten Bereich lokal ihre Isolierung entfernt wird.

Die Vorrichtung umfasst weiter eine Positioniereinheit. Die Positioniereinheit ist ausgebildet, um die Leiterstücke im Arbeitsbereich in der Fokuszone zu positionieren. Mittels der Positioniereinheit kann also die Position bzw. die Lage der Leiterstücke im Arbeitsbereich festgelegt werden. Die Positioniereinheit kann insbesondere deren Position in Transportrichtung und/oder Querrichtung und/oder in der zu diesen beiden Richtungen orthogonalen Höhenrichtung festlegen.

Die Vorrichtung umfasst weiter eine Rotationseinheit, die ausgebildet ist, um die Leiterstücke im Arbeitsbereich um ihre jeweilige Leiterstückachse zu rotieren. Dadurch kann zum einen ein stufen- und wechselweises Rotieren und Bestrahlen der einzelnen Leiterstücke durchgeführt werden. Insbesondere bei Leiterstücken mit rechteckigem Querschnitt kann so jeweils eine Fläche des Außenumfangs der Leiterstücke bestrahlt werden bis die Isolierung an dieser Fläche abgetragen ist. Anschließend kann das Leiterstück um 90° gedreht werden und die nächste Fläche des Leiterstücks kann bestrahlt werden. Im Anschluss kann das Leiterstück bzw. können die Leiterstücke wieder um 90° (eine viertel Drehung um ihre Leiterstückachse) rotiert werden und bestrahlt werden. Dies kann wiederholt werden, bis alle 4 Seitenflächen des rechteckigen Leiterstücks im abzuisolierenden Bereich bestrahlt wurden. Es sind jedoch auch Ausbildungen und Betriebsarten der Vorrichtung denkbar, in denen die Leiterstücke konstant aus einer Richtung bestrahlt werden und kontinuierlich rotiert werden, bis der gesamte Umfang der Leiterstücke bestrahlt und damit abisoliert worden ist. Die Strahlquelle kann damit stationär gehalten werden und die Leiterstücke können mit hoher Taktgeschwindigkeit und Präzision abisoliert werden. Die Bestrahlung der Leiterstücke erfolgt dabei jeweils im Bereich ihrer Enden, da nur hier die Isolierung zu entfernen ist. Ein Sationärhalten der Strahlquelle kann eine Höhenanpassung im Bereich der Stärke der Einzelnen Leiterstücke umfassen. Die Strahlquelle wird jedoch nicht um die Leiterstückachse herum rotiert. Auch ist es möglich, dass die Strahlquelle geringfügig transversal bewegt wird, bspw. von der Position eines Leiterstücks zur Position des nächsten Leiterstücks, die zeitgleich bearbeitet werden. Derartige geringfügige Anpassungen sind auch durch eine Anpassung der Fokuslage der Strahlquelle möglich. Mit stationärgehalten ist also jedenfalls gemeint, dass die Strahlquelle nicht um die Leiterstückachse herum rotiert wird bspw. einmal von oben und im nächsten Schritt von unten die Leiterstücke bestrahlt.

Die Positioniereinheit der Vorrichtung kann einen Anschlag für die Leiterstücke in Richtung der Leiterstückachse bzw. der Transportrichtung umfassen. Die Leiterstücke können, beispielsweise mittels der Transporteinrichtung gegen diesen Anschlag bewegt werden, sodass sie mit ihrer Kopfseite an dem Anschlag anliegen. Hierdurch ist die Position der Leiterstücke in Transportrichtung genau festgelegt. Der Anschlag kann, insbesondere in Höhenrichtung, beweglich angeordnet sein. So kann er aus der Transportstrecke der Leiterstücke in einfacher Art und Weise hinausbewegt werden. Denkbar ist auch, dass der Anschlag umklappbar ausgebildet ist.

Die Positioniereinheit kann alternativ oder zusätzlich eine Greifereinheit umfassen. Die Greifereinheit ist ausgebildet, um die Leiterstücke in Höhenrichtung beidseitig zu kontaktieren und damit ihre Position in Höhenrichtung zu festzulegen. Die Greifereinheit kann zwei in Höhenrichtung aufeinander zu und voneinander wegbewegbare Greifelemente umfasst.

Vorrichtung kann eine Antriebswelle umfassen, die über eine Getriebeeinheit mit der Rotationseinheit und der Positioniereinheit gekoppelt ist. Eine Rotation der Antriebswelle wird über die Getriebeeinheit an die Rotationseinheit und die Positioniereinheit übertragen, so dass diese über die Antriebswelle betrieben werden. Die Bewegung der Antriebswelle wird mit der Getriebeinheit auf die Rotationseinheit und den Anschlag bzw. die Greifereinheit übertragen.

Die Getriebeinheit kann mehrere Getriebeelemente umfassen. Getriebeelemente sind typischerweise als Kurvenbahnen oder Kurvenscheiben ausgebildet. Der Anschlag bzw. die Greifereinheit können jeweils über einen Stößel, der mit dem jeweiligen Getriebeelement gekoppelt ist und den Abtrieb des Getriebeelements bildet, mit der Getriebeeinheit gekoppelt sein.

Die Transporteinrichtung kann derart ausgebildet sein, dass mittels der Transporteinrichtung zunächst erste Enden der Leiterstücke in den Arbeitsbereich bewegt werden und dort mittels der Positioniereinheit positioniert und durch Bestrahlung abisoliert werden und anschließend die Leiterstücke in Transportrichtung weiter bewegt werden, so dass sich die zweiten Enden der Leiterstücke im Arbeitsbereich befinden und dort mittels der Positioniereinheit positioniert und durch Bestrahlung abisoliert werden. Hierzu können die Leiterstücke mittels der Transporteinrichtung zunächst gegen den Anschlag bewegt werden. Nachdem diese dort abisoliert wurden kann der Anschlag aus der Transportstrecke hinausbewegt werden. Die Leiterstücke können weiter in Transportrichtung mit der Transporteinrichtung bewegt werden. Anschließend kann die Bewegungsrichtung der Leiterstücke kurz umgekehrt werden und die Leiterstücke können entgegen ihrer vorigen Transportrichtung gegen den dann wieder in der Transportstrecke befindlichen Anschlag bewegt werden, sodass sie mit ihren zweiten Enden an dem Anschlag anliegen und im Bereich der zweiten Enden abisoliert werden können.

Wie bereits erwähnt, so betrifft die Erfindung ebenfalls ein Verfahren zum Abisolieren von entlang einer jeweiligen Leiterstückachse gerade erstreckten, abgelängten Leiterstücken, die eine als Ummantelung ausgebildete Isolierung umfassen. Das Verfahren zum Abisolieren der Leiterstücke kann den Schritt c) des Verfahrens zum Herstellen von Steckspulen bilden.

Das Verfahren umfasst das Bewegen mehrerer Leiterstücke entlang einer Transportrichtung (bzw. entlang einer Transportstrecke), wobei die Leiterstücke mit ihren Leiterstückachsen parallel zur Transportrichtung ausgerichtet sind. Die mehreren Leiterstücke sind dabei in einer zur Transportrichtung orthogonalen Querrichtung versetzt und parallel zueinander ausgerichtet angeordnet.

Das Verfahren umfasst weiter das Positionieren erster Enden der Leiterstücke in einer Fokuszone einer Strahlquelle. Dabei gelten die oben im Zusammenhang mit der Vorrichtung gemachten Erläuterungen bezüglich der Strahlquelle und der Fokuszone der Strahlquelle.

Das Verfahren umfasst weiter das Bestrahlen der ersten Enden der Leiterstücke mit einer elektromagnetischen Strahlung, insbesondere einer Laserstrahlung, um die Isolation auf einer ersten bestrahlten Seite im Bereich der ersten Enden zu entfernen. Zur Bestrahlung der abzuisolierenden Bereiche wird im Rahmen des Verfahrens aber auch im Zusammenhang mit der Vorrichtung vorzugsweise gepulste Laserstrahlung verwendet. Insbesondere wird eine Laserstrahlung mit einer Wellenlänge im Bereich von 1000nm bis 1100nm, insbesondere 1064nm verwendet. Was sich besonders zum Abtrag der Isolierung eignet. Typischerweise wird ein Faserlaser verwendet.

Das Verfahren umfasst weiter ein Rotieren der Leiterstücke um ihre jeweilige Leiterstückachse. Durch das Rotieren können unterschiedliche Bereiche der umfänglichen Oberfläche der Leiterstücke in den durch die Strahlquelle bestrahlten Bereich bewegt werden.

Gegebenenfalls kann das Verfahren ein erneutes Positionieren der ersten Enden der Leiterstücke in der Fokuszone der Strahlquelle umfassen.

Das Verfahren umfasst entweder ein erneutes Bestrahlen (im Anschluss an die Rotation) der ersten Enden der Leiterstücke mit der elektromagnetischen Strahlung, insbesondere Laserstrahlung, um die Isolation auf einer zweiten bestrahlten Seite im Bereich der ersten Enden zu entfernen, oder es umfasst das kontinuierliche Bestrahlen der ersten Enden der Leiterstücke während der Rotation der Leiterstücke.

Die Leiterstücke können, nachdem die Isolation im Bereich der ersten Enden entfernt wurde, in Transportrichtung weiterbewegt werden und die Schritte durchgeführt werden:
Positionieren zweiter Enden der Leiterstücke in der Fokuszone der Strahlquelle, die bereits zum Bestrahlen der ersten Enden verwendet wurde. Die zweiten Enden bilden das den ersten Enden gegenüberliegende Ende der Leiterstücke.

Bestrahlen der zweiten Enden der Leiterstücke mit der elektromagnetischen Strahlung, insbesondere Laserstrahlung, um die Isolation auf einer ersten bestrahlten Seite der Leiterstücke im Bereich der zweiten Enden zu entfernen.

Rotieren der Leiterstücke um ihre jeweilige Leiterstückachse.

Erneutes Positionieren der zweiten Enden der Leiterstücke in der Fokuszone der Strahlquelle.

Erneutes Bestrahlen der zweiten Enden der Leiterstücke mit der elektromagnetischen Strahlung, um die Isolation auf einer zweiten bestrahlten Seite im Bereich der zweiten Enden zu entfernen oder alternativ kontinuierliches Bestrahlen der ersten Enden der Leiterstücke während dem rotieren der Leiterstücke.

Im Rahmen des Verfahrens oder bei Verwendung der Vorrichtung, können die Leiterstücke also entweder rotiert und an ihren Enden kontinuierlich mittels der Strahlquelle bestrahlt werden oder die Leiterstücke werden bestrahlt, die Bestrahlung wird unterbrochen und die Leiterstücke werden um einen Schritt weiter rotiert, bestrahlt und wieder weiter rotiert und erneut bestrahlt, usw. Typischerweise wird hierzu in jedem Schritt um 90° rotiert (eine Vierteldrehung) und die Bestrahlung während der Rotation jeweils unterbrochen. Falls sich durch die Rotation der Leiterstücke die Position der Seite der Leiterstücke, die der Strahlungsquelle zugewandt ist, ändert, so kann diese Höhenlage mittels der Positioniereinheit bzw. durch erneutes Positionieren angepasst werden.

Werden die Leiterstücke kontinuierlich bestrahlt und rotiert, so kann vorgesehen sein, dass die Lage der jeweiligen bestrahlten Oberfläche (die Lage der Seite der Leiterstücke, die der Strahlquelle zugewandt ist) in Höhenrichtung konstant gehalten wird.

Insbesondere bei der Verwendung von Leiterstücken mit einem rechteckigen Querschnitt bietet sich ein abwechselndes Rotieren und Bestrahlen an.

Vorzugsweise umfasst die Vorrichtung eine Absaugung Einrichtung, mit der im Bereich der Fokuszone eine Strömung der Umgebungsluft von 15 m/s - 30 m/s, insbesondere 20 m/s - 25 m/s erzeugt werden kann. Insbesondere wird im Rahmen der Verfahrensführung eine derartige Durchströmung des Arbeitsbereichs bzw. der Fokuszone verwendet.

Die Erfindung wird im Folgenden anhand der Figuren näher erläutert, wobei gleiche oder funktional gleiche Elemente ggf. lediglich einmal mit Bezugszeichen versehen sind. Es zeigen:
- Fig.1: hairpinförmige Steckspulen;
- Fig.2: ein Leiterstück in verschiedenen abisolierten Zuständen;
- Fig.3: eine Vorrichtung zum Herstellen von Steckspulen;

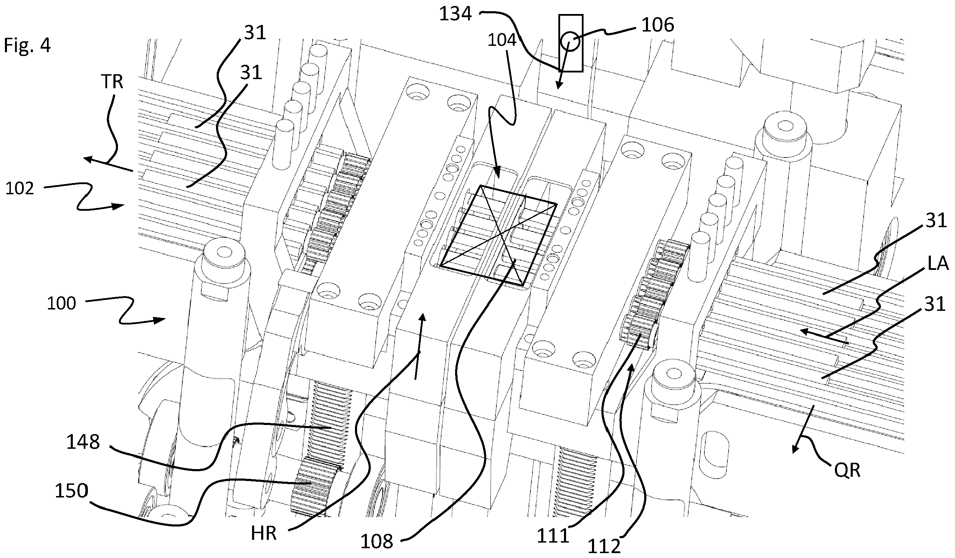

- Fig.4: eine Vorrichtung zum Abisolieren von entlang einer jeweiligen Leiterstückachse gerade erstreckten, abgelängten Leiterstücken;

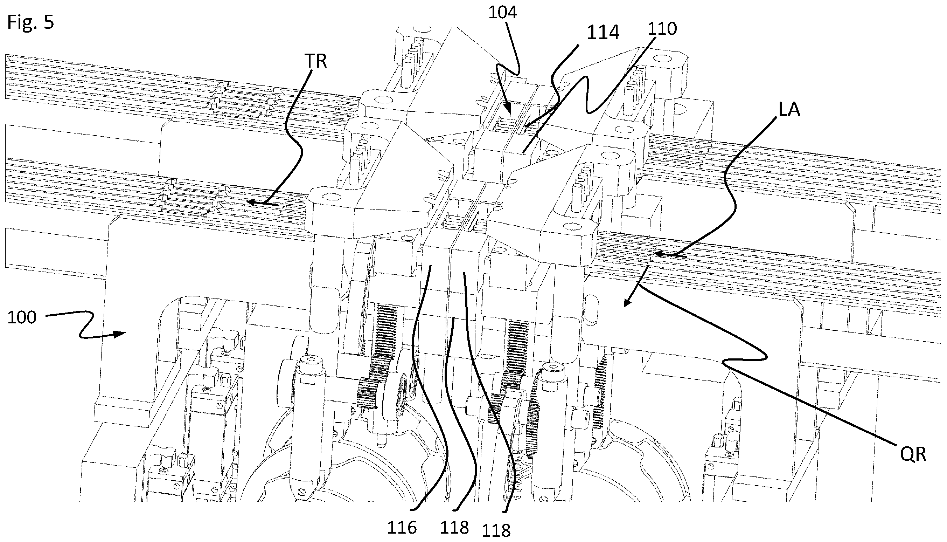

- Fig.5: die Vorrichtung aus Fig. 4 in einer anderen Perspektive; und

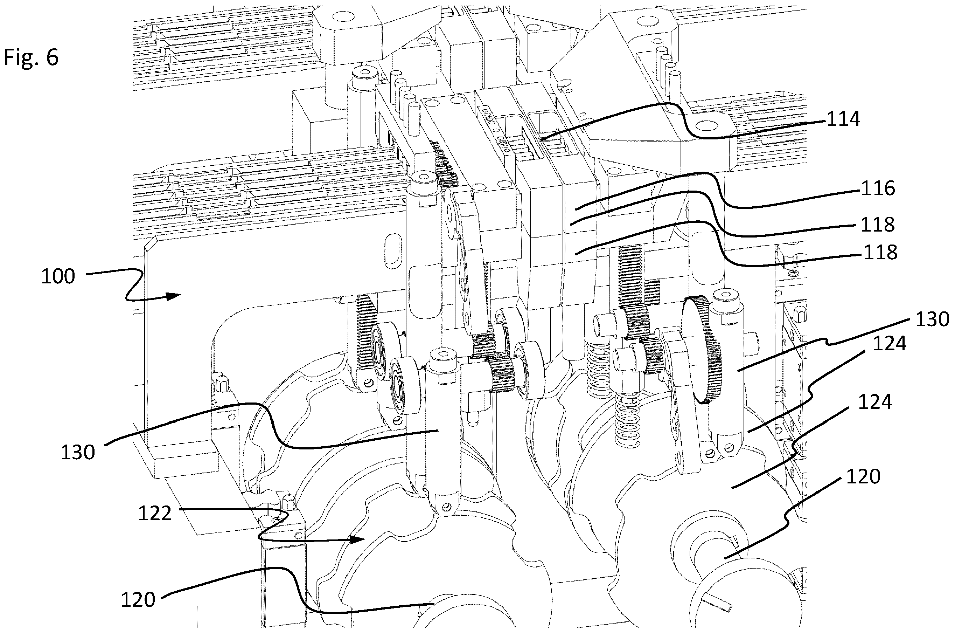

- Fig.6: die Vorrichtung aus Fig. 4 in einer anderen Perspektive.

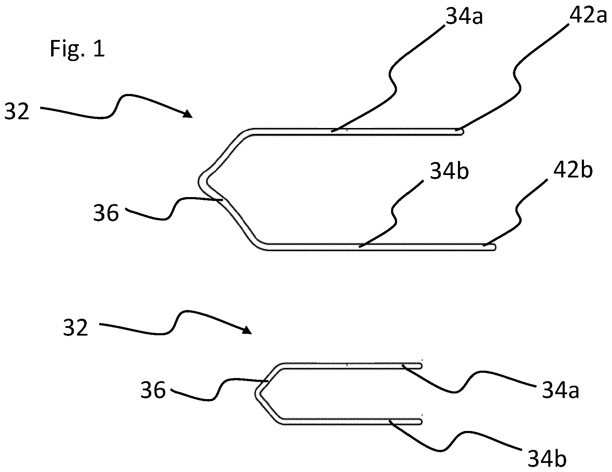

Figur 1 zeigt zwei Steckspulen 32. Die obere Steckspule ist weist eine 3-dimensional geformte Hairpinform auf. Der Hairpin weist zwei im Wesentlichen länglich erstreckten Schenkel 334a und 34b auf mit jeweiligen abisolierten ersten und zweiten Enden 42a und 42b. Der Hairpin weist weiter einen die beiden Schenkel 34a und 34b verbindenden Verbindungsabschnitt 36 auf. Dieser ist 3-dimensional geformt, er erstreckt sich also aus der Ebene in der die beiden Schenkel 34 a und 34b liegen hinaus.

Der untere Hairpin 32 weist eine 2-dimensionale Form auf, sein Verbindungsabschnitt 36 liegt also mit den beiden Schenkel 34a und 34b in einer Ebene.

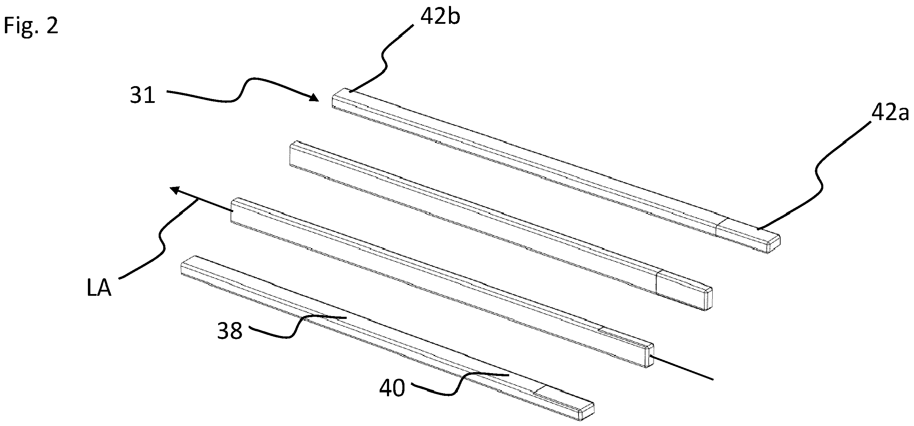

Fig. 2 zeigt ein Leiterstück 31 in verschiedenen abisolierten Zuständen. In jeder Darstellung ist das Leiterstück 31 gegenüber der vorigen um 90° um eine Leiterstückachse LA rotiert. Dabei ist jeweils eine nach oben gewandte Seite des Leiterstücks zusätzlich abisoliert. Eine als Ummantelung ausgebildete Isolierung 40 wurde also auf dieser Seite im Bereich der ersten Endes 42a entfernt. Das in Fig. 2 gezeigte Leiterstück wurde durch Abrollen, Begradigen und Ablängen eines zunächst aufgerollten, quasi endlosen Leitermaterials 38 gefertigt.

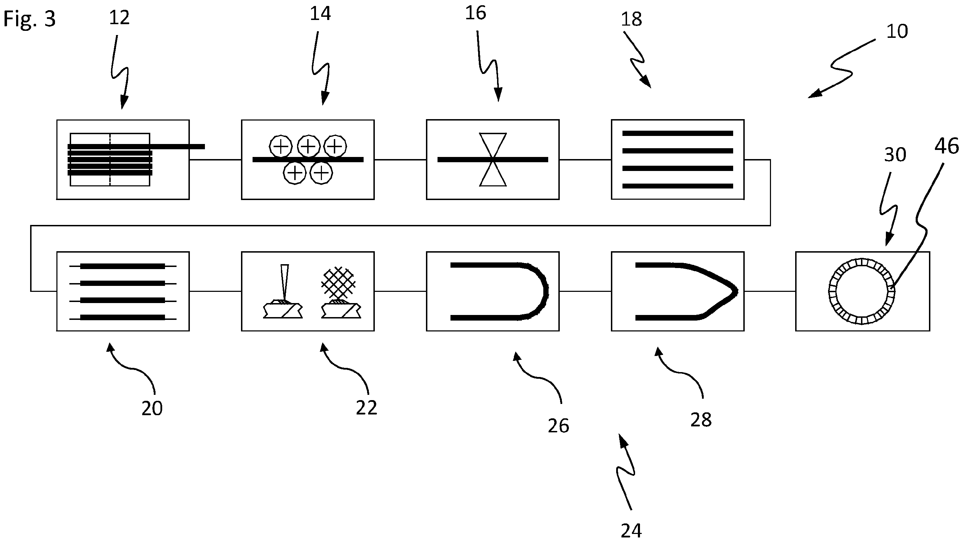

Fig. 3 zeigt eine Vorrichtung 10 zum Herstellen von Steckspulen, insbesondere Hairpin-Steckspulen 32, wie sie bspw. in Figur 2 gezeigt sind.

Die Vorrichtung umfasst eine Lieferstation 12. In der Lieferstation 12 liegt Leitermaterial 38 als aufgerolltes quasi endloses Leitermaterial 38 vor. In der Lieferstation 12 wird das Leitermaterial 38 Rollen abgewickelt und einer direkt auf die Lieferstation 12 folgenden Begradigungsstation 14 zugeführt. In dieser wird das Leitermaterial 38 begradigt, also etwaige Krümmungen, die durch den vorigen aufgerollten Zustand verursacht sind, werden entfernt. Die Vorrichtung 10 weist entlang einer Transportstrecke 44 auf die Lieferstation 12 und die Begradigungsstation 14 folgend umfasst:

Eine Ablängstation 16 zum Ablängen des Leiterstückmaterials 38 in Leiterstücke 31 mit einer für die spätere Steckspule 32 vorgesehenen Länge. über eine Vereinzelungsstation 18 ist eine Abisolierstation 20 zum Abisolieren der Enden 42a, 42b der Leiterstücke 31 mit der Ablängstation 16 verbunden. Die Vereinzelungsstation 18 ist in Fig. 3 auch vergrößert separat dargestellt und mit einem zusätzlichen Bezugszeichen 18 versehen.

Auf die Abisolierstation 20 folgend ist eine Mess- und Bürststation 22 in der Vorrichtung 10 angeordnet. Diese Station 22 dient zum Vermessen der Leiterstücke 31, insbesondere des Ergebnisses des Abisolierens. In der Mess- und Bürststation 22 erfolgt weiter ein Abbürsten der abisolierten Enden 42a, 42b der Leiterstücke 31 um evtl. vorhandene Reste an Isolationsmaterial zu entfernen. Auf die Mess- und Bürststation 22 folgend ist eine Biegestation 24 zum Umformen der Leiterstücke 31 in eine Form einer vorgesehenen Steckspule 32 in der Vorrichtung 10 angeordnet. Vorliegend umfasst die Biegestation 24 eine Freiformbiegeeinheit 26 zur Umformung der Leiterstücke 31 in einzeln vorgebbare dreidimensionale Steckspulenformen und drei 2D-Biegeeinheiten 28 zur Umformung der Leiterstücke 31 in zweidimensionale Steckspulenformen.

Auf die Biegestation 24 folgend ist eine Einsetzstation 30 zum Einsetzen der Steckspulen 32 in einen Statorkern 46 in der Vorrichtung 10 angeordnet.

Auf der gezeigten Vorrichtung 10 wird ein Verfahren zum Herstellen von Steckspulen 32 bzw. vorliegend Hairpin-Steckspulen 32 aus dem aufgerollten, quasi endlosen Leitermaterial 38 durchgeführt. Das Verfahren umfasst demnach entlang der Transportstrecke 44 nacheinander die folgenden Schritte:
Begradigen des zuvor aufgerollten Leitermaterials 38.

Ablängen des Leiterstückmaterials 38 in Leiterstücke 31 mit einer für die spätere Steckspule 32 vorgesehenen Länge.

Abisolieren der Enden 42a, 42b der Leiterstücke 31.

Vermessen der Leiterstücke 31, insbesondere des Ergebnisses des Abisolierens, und/oder Abbürsten der abisolierten Enden 42a, 42b der Leiterstücke 31.
Umformen der Leiterstücke 31 in eine Form einer vorgesehenen Steckspule 32. Einsetzen der Steckspulen 32 in einen Statorkern 46.

Vereinzeln der abgelängten Leiterstücke 31.

Beim Umformen der Leiterstücke 31 können diese in eine dreidimensionale Steckspulenform oder in eine zweidimensionale Steckspulenform umgeformt werden.

Die Abisolierstation 20 ist als Vorrichtung 100 zum Abisolieren von entlang einer jeweiligen Leiterstückachse LA gerade erstreckten, abgelängten Leiterstücken 31, die eine als Ummantelung ausgebildete Isolierung 40 umfassen, ausgebildet.

Die Abisolierstation 20 bzw. Vorrichtung 100 umfasst eine Transporteinrichtung 102, die ausgebildet ist, um mehrere Leiterstücke 31 zeitgleich entlang einer zur Leiterstückachse LA parallelen Transportrichtung TR zu bewegen. Die Leiterstücke 31 sind in einer zur Transportrichtung TR orthogonalen Querrichtung QR parallel zueinander und nebeneinander angeordnet.

Die Vorrichtung 100 weist einen Arbeitsbereich 104 auf in dem das Abisolieren der Leiterstücke 31 erfolgt. Eine Strahlquelle 106 ist derart ausgebildet und angeordnet, dass die Strahlquelle 106 eine Fokuszone 108 im Arbeitsbereich 104 aufweist. Die Strahlquelle 106 ist zur gerichteten Abgabe von elektromagnetischer Strahlung 134 (im vorliegenden Fall Laserstrahlung 134) ausgebildet. In der Fokuszone 108 ist die elektromagnetische Strahlung 134 fokussiert, bzw. die Strahlquelle 106 kann derart betrieben werden, dass deren elektromagnetische Strahlung 134 in der Fokuszone 108 fokussiert ist. Die Leiterstücke 31, die sich im Arbeitsbereich 104 befinden, können mittels der Strahlquelle 106 in der Fokuszone 108 derart bestrahlt werden, dass in dem bestrahlten Bereich lokal ihre Isolierung 40 entfernt wird.

Die Vorrichtung 100 weist weiter eine Positioniereinheit 110 auf, die ausgebildet ist, um die Leiterstücke 31 im Arbeitsbereich 104 in der Fokuszone 108 zu positionieren. Die Positioniereinheit 110 legt deren Position in Transportrichtung TR, Querrichtung QR und in einer zu diesen beiden Richtungen orthogonalen Höhenrichtung HR fest.

Die Positioniereinheit 110 umfasst einen Anschlag 114 für die Leiterstücke 31 in Richtung der Transportrichtung TR. Die Leiterstücke 31 können also mit ihren dem Anschlag 114 zugewandten Enden an diesen heranbewegt werden und mit diesem in Kontakt gebracht werden, so dass ihre Position in Transportrichtung TR durch die Position des Anschlags 114 genau definiert ist. Der Anschlag ist vorliegend absenkbar, also in Höhenrichtung HR bewegbar. Es ist auch denkbar den Anschlag 114 schwenkbar bzw. umklappbar auszubilden. Hierauf wird noch im Detail eingegangen.

Die Positioniereinheit 110 umfasst weiter eine Greifereinheit 116, die ausgebildet ist, um die Leiterstücke 31 in Höhenrichtung HR beidseitig zu kontaktieren und damit ihre Position in Höhenrichtung HR zu festzulegen. Die Greifereinheit 116 kann zwei in Höhenrichtung aufeinander zu und voneinander wegbewegbare Greifelemente 118 umfassen. Vorliegend weisen die Greifelemente 118 je Leiterstück 31 Ausnehmungen mit einem Kreuzartigen Querschnitt auf, so dass die Leiterstücke 31 in jeder um 90° versetzten Rotationslage flächig kontaktiert werden können (Längsseite und Querseite des rechteckigen Querschnitts der Leiterstücke 31).

Die Vorrichtung 100 umfasst weiter eine Rotationseinheit 112, die ausgebildet ist, um die Leiterstücke 31 im Arbeitsbereich 104 um ihre jeweilige Leiterstückachse LA zu rotieren. Vorliegend weist die Rotationseinheit 112 je Leiterstück 31 eine Führungseinheit 111 mit einem Innenquerschnitt, der die Leiterstücke 31 vollumfänglich kontaktiert und in ihrer Ausrichtung festlegt. Die jeweilige Führungseinheit 111 weist auf Ihrer Außenseite eine Verzahnung auf und ist jeweils drehbar gelagert.

Die Vorrichtung 100 umfasst weiter eine Antriebswelle 120 umfasst, die über eine Getriebeeinheit 122, die mehrere Getriebeelemente 124 umfasst, mit der Rotationseinheit und der Positioniereinheit 116, insbesondere dem Anschlag 114 und der Greifereinheit 116, gekoppelt ist, sodass durch eine Rotation der Antriebswelle 120 die Rotationseinheit 112 und die Positioniereinheit 110 betrieben wird.

Die Getriebeeinheit 122 umfasst mehrere als Kurvenbahn ausgebildete Getriebeelemente 124, die über Stößelabtriebe 130 mit der Greifereinheit 116 und dem Anschlag 114 der Positioniereinheit 110 gekoppelt sind. Über Zahnräder 148 und Zahnstangen 150 ist auch die Rotationseinheit 112 bzw. deren Führungseinheiten 111 mit der Getriebeeinheit 122 bzw. deren Getriebeelementen 124 gekoppelt. Durch Rotation der Antriebswelle 120 werden die Getriebeelemente 124 rotiert und die jeweiligen Stößelabtriebe 130 bewegen die Greifelemente 118 auf und ab bzw. in eine geöffnete bzw. geschlossene Position. Ebenso wird über die Rotation der Antriebswelle 120 bzw. der Getriebeelemente 124 eine Rotation der Führungseinheiten 111 bewirkt. Dabei sind die Getriebeelemente 124, die als Kurvenbahnen ausgebildet sind, mit über den größten Teil ihres Umfangs gleichbleibendem Durchmesser ausgebildet und weisen in umfänglicher Richtung nur gering erstreckte Änderungsabschnitte auf, die die eigentliche Bewegung der Positioniereinheit 110 bzw. der Rotationseinheit 112 bewirken.

Die Transporteinrichtung 102 ist derart ausgebildet, dass mittels der Transporteinrichtung 102 zunächst die erste Enden 42a der Leiterstücke 31 in den Arbeitsbereich bewegt werden und dort mittels der Positioniereinheit 110 positioniert und durch Bestrahlung abisoliert werden. Anschließend werden die Leiterstücke 31 in
Transportrichtung TR weiterbewegt, so dass sich die zweiten Enden 42b der Leiterstücke 31 im Arbeitsbereich 104 befinden und dort mittels der Positioniereinheit 110 positioniert und durch Bestrahlung abisoliert werden.

Bei dem Verfahren zum Abisolieren von entlang einer jeweiligen Leiterstückachse LA gerade erstreckten, abgelängten Leiterstücken 31 umfasst das Verfahren mehrere Schritte. Bewegen mehrerer Leiterstücke 31 entlang einer Transportrichtung TR, wobei die Leiterstücke 31 mit ihren Leiterstückachsen LA parallel zur Transportrichtung TR ausgerichtet sind, wobei die mehreren Leiterstücke 31 in einer zur Transportrichtung TR orthogonalen Querrichtung QR versetzt und parallel zueinander ausgerichtet sind. Ein weiterer Schritt ist Positionieren erster Enden 42a der Leiterstücke 31 in einer Fokuszone 108 einer Strahlquelle 106. Das Verfahren umfasst weiter den Schritt: Bestrahlen der ersten Enden 42a der Leiterstücke 31 mit einer elektromagnetischen Strahlung 134, insbesondere Laserstrahlung 134, um die Isolation auf einer ersten bestrahlten Seite 140a im Bereich der ersten Enden 42a zu entfernen. Weiter umfasst das Verfahren das Rotieren der Leiterstücke 31 um ihre jeweilige Leiterstückachse LA. Insbesondere kann das Verfahren erneutes Positionieren der erster Enden 42a der Leiterstücke 31 in der Fokuszone 108 der Strahlquelle 106 umfassen und weiter kann erneutes Bestrahlen der ersten Enden 42a der Leiterstücke 31 mit der elektromagnetischen Strahlung 134 vorgesehen sein, um die Isolation 40 auf einer zweiten bestrahlten Seite 140b im Bereich der ersten Enden 42a zu entfernen. Alternativ kann kontinuierliches Bestrahlen der ersten Enden 42a der Leiterstücke 32 während dem Rotieren der Leiterstücke 31 vorgesehen sein.

Nachdem die Isolation im Bereich der ersten Enden 42a entfernt wurde, können die Leiterstücke 31 in Transportrichtung TR weiterbewegt werden. Anschließend können die Schritte durchgeführt werden: Positionieren zweiter Enden 42b der Leiterstücke 31 in der Fokuszone 108 der Strahlquelle 106, die bereits zum Bestrahlen der ersten Enden 42b verwendet wurde. Bestrahlen der zweiten Enden 42b der Leiterstücke 31 mit der elektromagnetischen Strahlung 134, um die Isolation 40 auf einer ersten bestrahlten Seite 142a im Bereich der zweiten Enden 42b zu entfernen. Rotieren der Leiterstücke 31 um ihre jeweilige Leiterstückachse LA. Es kann dann alternativ ein erneutes Positionieren der zweiten Enden 42b der Leiterstücke 31 in der Fokuszone 108 der Strahlquelle 106 und ein erneutes Bestrahlen der zweiten Enden 42b der Leiterstücke 31 mit der elektromagnetischen Strahlung 134 erfolgen, um die Isolation 40 auf einer zweiten bestrahlten Seite 142b im Bereich der zweiten Enden 42b zu entfernen oder alternativ kann ein kontinuierliches Bestrahlen der zweiten Enden 42b der Leiterstücke 31 während dem Rotieren der Leiterstücke 31 durchgeführt werden.

Die Leiterstücke 31 können je Ende 3-mal um jeweils um 90° in einem Rotationsschritt rotiert werden, wobei sie während der Rotation nicht bestrahlt werden. Die Rotationseinheit 112 und Getriebeeinheit 122 können hierzu entsprechend ausgebildet sein. Hierzu können die Getriebeelemente 124 einen entsprechenden Kurvenverlauf an ihrem Umfang aufweisen.

Die Leiterstücke 31 können wie erwähnt kontinuierlich bestrahlt und rotiert werden. Dabei kann die Lage der jeweiligen bestrahlten Oberfläche in Höhenrichtung HR konstant gehalten werden, so dass die Oberfläche stets im Fokus der Strahlquelle liegt.

Die Leiterstücke 31 weisen typischerweise einen rechteckigen Querschnitt auf, so dass die Bewegung der Rotationseinheit 112 und der Positioniereinheit 110 durch Verwendung einer entsprechenden Getriebeeinheit 122 eingestellt werden kann.

## Patentansprüche

1. Vorrichtung (10) zum Herstellen von Steckspulen (32), insbesondere Hairpin-Steckspulen (32), aus einem, insbesondere aufgerollten, quasi endlosen Leitermaterial (38), das eine als Ummantelung ausgebildete Isolierung (40) umfasst, wobei die Vorrichtung (10) entlang einer Transportstrecke (44) angeordnet umfasst:
eine Ablängstation (16) zum Ablängen des Leiterstückmaterials (38) in Leiterstücke (31) mit einer für die spätere Steckspule (32) vorgesehenen Länge,
eine Abisolierstation (20) zum Abisolieren der Enden (42a, 42b) der Leiterstücke (31) mittels elektromagnetischer Strahlung einer Strahlquelle, insbesondere Laserstrahlung, insbesondere wobei die Abisolierstation (20) eine Rotationseinheit (112) umfasst mittels deren eine rotatorische Relativbewegung zwischen Leiterstücken und der Strahlquelle bewirkbar ist, insbesondere wobei die Rotationseinheit (112) eine Rotation der Leiterstücke um ihre Längsachse bewirken kann,
insbesondere eine Mess- und/oder Bürststation (22) zum Vermessen der Leiterstücke (31), insbesondere des Ergebnisses des Abisolierens, und/oder Abbürsten der abisolierten Enden (42a, 42b) der Leiterstücke (31),
eine Biegestation (24) zum Umformen der Leiterstücke (31) in eine Form einer vorgesehenen Steckspule (32),
insbesondere eine Einsetzstation (30) zum Einsetzen der Steckspulen (32) in einen Statorkern (46).

2. Vorrichtung nach Anspruch 1, **dadurch gekennzeichnet, dass** die Biegestation (24) wenigstens eine Freiformbiegeeinheit (26) zur Umformung der Leiterstücke (31) in einzeln vorgebbare dreidimensionale Steckspulenformen und / oder eine 2D-Biegeeinheit zur Umformung der Leiterstücke (31) in zweidimensionale Steckspulenformen umfasst.

3. Vorrichtung nach Anspruch 1, **dadurch gekennzeichnet, dass** entlang der Transportstrecke (44) zwischen der Ablängstation (16) und der Abisolierstation (20) eine Vereinzelungsstation (18) zum Vereinzeln der abgelängten Leiterstücke (31) angeordnet ist.

4. Verfahren zum Herstellen von Steckspulen (32), insbesondere Hairpin-Steckspulen (32), aus einem, insbesondere aufgerollten, quasi endlosen Leitermaterial (38), das eine als Ummantelung ausgebildete Isolierung (40) umfasst, wobei das Verfahren nacheinander die folgenden Schritte umfasst:
a) insbesondere Begradigen des zuvor aufgerollten Leitermaterials;
b) Ablängen des Leitermaterials (38) in Leiterstücke (31) mit einer für die spätere Steckspule (32) vorgesehenen Länge;
c) Abisolieren der Enden (42a, 42b) der Leiterstücke (31) mittels elektromagnetischer Strahlung, insbesondere Laserstrahlung, insbesondere wobei eine rotatorische Relativbewegung zwischen Leiterstücken und einer Strahlquelle der elektromagnetischen Strahlung erfolgt, insbesondere wobei die Leiterstücke um ihre jeweilige Leiterstückachse rotiert werden;
optional d) Vermessen der Leiterstücke (31), insbesondere des Ergebnisses des Abisolierens, und/oder Abbürsten der abisolierten Enden (42a, 42b) der Leiterstücke (31);
e) Umformen der Leiterstücke (31) in eine Form einer vorgesehenen Steckspule (32);
f) insbesondere Einsetzen der Steckspulen (32) in einen Statorkern (46).

5. Verfahren nach Anspruch 4, **dadurch gekennzeichnet, dass** es im Schritt e) ein Umformen eines Leiterstücks (31) in eine dreidimensionale Steckspulenform und/oder ein Umformen eines Leiterstücks (31) in zweidimensionale Steckspulenform umfasst.

6. Verfahren nach Anspruch 4 oder 5, **dadurch gekennzeichnet, dass** zwischen den Schritten b) und c) ein Vereinzeln der abgelängten Leiterstücke (31) erfolgt.

7. Vorrichtung (100) zum Abisolieren von entlang einer jeweiligen Leiterstückachse (LA) gerade erstreckten, abgelängten Leiterstücken (31), die eine als Ummantelung ausgebildete Isolierung (40) umfassen,
mit einer Transporteinrichtung (102), die ausgebildet ist, um mehrere Leiterstücke (31) zeitgleich entlang einer zur Leiterstückachse (LA) parallelen Transportrichtung (TR) zu bewegen, wobei die Leiterstücke (31) in einer zur Transportrichtung (TR) orthogonalen Querrichtung (QR) parallel zueinander und nebeneinander angeordnet sind,
mit einem Arbeitsbereich (104) in dem das Abisolieren der Leiterstücke (31) erfolgt,
mit einer Strahlquelle (106), wobei die Strahlquelle (106) eine Fokuszone (108) im Arbeitsbereich (104) aufweist und angeordnet ist, um die Leiterstücke (31), die sich im Arbeitsbereich (104) befinden, in der Fokuszone (108) derart zu bestrahlen, dass in dem bestrahlten Bereich lokal ihre Isolierung (40) entfernt wird,
und mit einer Positioniereinheit (110), wobei die Positioniereinheit (110) ausgebildet ist, um die Leiterstücke (31) im Arbeitsbereich (104) in der Fokuszone (108) zu positionieren, insbesondere deren Position in Transportrichtung (TR), Querrichtung (QR) und/oder einer zu diesen beiden Richtungen orthogonalen Höhenrichtung (HR), festzulegen,
**dadurch gekennzeichnet, dass**
die Vorrichtung (100) eine Rotationseinheit (112) umfasst, die ausgebildet ist, um die Leiterstücke (31) im Arbeitsbereich (104) um ihre jeweilige Leiterstückachse (LA) zu rotieren.

8. Vorrichtung nach Anspruch 7 **dadurch gekennzeichnet, dass** die Positioniereinheit (110) einen Anschlag (114) für die Leiterstücke (31) in Richtung der Transportrichtung (TR) umfasst und/oder eine Greifereinheit (116), die ausgebildet ist, um die Leiterstücke (31) in Höhenrichtung (HR) beidseitig zu kontaktieren und damit ihre Position in Höhenrichtung (HR) zu festzulegen, insbesondere wobei der Anschlag (114) in Höhenrichtung (HR) beweglich angeordnet ist und/oder insbesondere wobei die Greifereinheit (116) zwei in Höhenrichtung aufeinander zu und voneinander wegbewegbare Greifelemente (118) umfasst.

9. Vorrichtung nach einem der vorigen Ansprüche 7 oder 8, **dadurch gekennzeichnet, dass** sie eine Antriebswelle (120) umfasst, die über eine Getriebeeinheit (122), die mehrere Getriebeelemente (124) umfasst, mit der Rotationseinheit und der Positioniereinheit (116), insbesondere dem Anschlag (114) und der Greifereinheit (116), gekoppelt ist, sodass durch eine Rotation der Antriebswelle (120) die Rotationseinheit (112) und die Positioniereinheit (110) betrieben wird.

10. Vorrichtung nach einem der vorigen Ansprüche 7 bis 9, **dadurch gekennzeichnet, dass** die Transporteinrichtung (102) derart ausgebildet ist, dass mittels der Transporteinrichtung (102) zunächst erste Enden (42a) der Leiterstücke (31) in den Arbeitsbereich bewegt werden und dort mittels der Positioniereinheit (110) positioniert und durch Bestrahlung abisoliert werden und anschließend die Leiterstücke (31) in Transportrichtung (TR) weiter bewegt werden, so dass sich die zweiten Enden (42b) der Leiterstücke (31) im Arbeitsbereich (104) befinden und dort mittels der Positioniereinheit (110) positioniert und durch Bestrahlung abisoliert werden.

11. Vorrichtung nach einem der vorigen Ansprüche 7 bis 10, **dadurch gekennzeichnet, dass** die Getriebeeinheit (122) mehrere als Kurvenbahn ausgebildete Getriebeelemente (124) aufweist, die über Stößelabtriebe (130) mit der Greifereinheit (116) und dem Anschlag (114) der Positioniereinheit (110) gekoppelt sind.

12. Verfahren zum Abisolieren von entlang einer jeweiligen Leiterstückachse (LA) gerade erstreckten, abgelängten Leiterstücken (31), die eine als Ummantelung ausgebildete Isolierung (40) umfassen, wobei das Verfahren umfasst:
Bewegen mehrerer Leiterstücke (31) entlang einer Transportrichtung (TR), wobei die Leiterstücke (31) mit ihren Leiterstückachsen (LA) parallel zur Transportrichtung (TR) ausgerichtet sind, wobei die mehreren Leiterstücke (31) in einer zur Transportrichtung (TR) orthogonalen Querrichtung (QR) versetzt und parallel zueinander ausgerichtet sind;
Positionieren erster Enden (42a) der Leiterstücke (31) in einer Fokuszone (108) einer Strahlquelle (106);
Bestrahlen der ersten Enden (42a) der Leiterstücke (31) mit einer elektromagnetischen Strahlung (134), insbesondere Laserstrahlung (134), um die Isolation auf einer ersten bestrahlten Seite (140a) im Bereich der ersten Enden (42a) zu entfernen;
Rotieren der Leiterstücke (31) um ihre jeweilige Leiterstückachse (LA);
insbesondere erneutes Positionieren der erster Enden (42a) der Leiterstücke (31) in der Fokuszone (108) der Strahlquelle (106);
erneutes Bestrahlen der ersten Enden (42a) der Leiterstücke (31) mit der elektromagnetischen Strahlung (134) um die Isolation (40) auf einer zweiten bestrahlten Seite (140b) im Bereich der ersten Enden (42a) zu entfernen oder alternativ kontinuierliches Bestrahlen der ersten Enden (42a) der Leiterstücke (32) während dem Rotieren der Leiterstücke (31).

13. Verfahren zum Abisolieren von Leiterstücken (31) nach Anspruch 12, **dadurch gekennzeichnet, dass** Leiterstücke (31), nachdem die Isolation im Bereich der ersten Enden (42a) entfernt wurde in Transportrichtung (TR) weiter bewegt werden und die Schritte durchgeführt werden:
Positionieren zweiter Enden (42b) der Leiterstücke (31) in der Fokuszone (108) der Strahlquelle (106), die bereits zum Bestrahlen der ersten Enden (42b) verwendet wurde;
Bestrahlen der zweiten Enden (42b) der Leiterstücke (31) mit der elektromagnetischen Strahlung (134), um die Isolation (40) auf einer ersten bestrahlten Seite (142a) im Bereich der zweiten Enden (42b) zu entfernen;
Rotieren der Leiterstücke (31) um ihre jeweilige Leiterstückachse (LA);
insbesondere erneutes Positionieren der zweiten Enden (42b) der Leiterstücke (31) in der Fokuszone (108) der Strahlquelle (106);
erneutes Bestrahlen der zweiten Enden (42b) der Leiterstücke (31) mit der elektromagnetischen Strahlung (134), um die Isolation (40) auf einer zweiten bestrahlten Seite (142b) im Bereich der zweiten Enden (42b) zu entfernen oder alternativ kontinuierliches Bestrahlen der zweiten Enden (42b) der Leiterstücke (31) während dem rotieren der Leiterstücke (31).

14. Verfahren zum Abisolieren von Leiterstücken (31) nach Anspruch 12 oder 13, **dadurch gekennzeichnet, dass** die Leiterstücke (31) je Ende 3-mal um jeweils um 90° in einem Rotationsschritt rotiert werden, wobei sie während der Rotation nicht bestrahlt werden.

15. Verfahren zum Abisolieren von Leiterstücken nach Anspruch 12 oder 13, **dadurch gekennzeichnet, dass** die Leiterstücke (31) kontinuierlich bestrahlt und rotiert werden, insbesondere wobei eine Lage der jeweiligen bestrahlten Oberfläche in einer in Höhenrichtung (HR), die zur Transportrichtung (TR) und zur Querrichtung (QR) orthogonal ist, konstant gehalten wird.
